# EUROPEAN PATENT APPLICATION

(11) **EP 3 197 019 A1**
(43) Date of publication of application: **26.07.2017**
(21) Application number: 15837413.2
(22) Date of filing: 17.08.2015
(51) Int. Cl.: H02K 1/18, H02K 1/28

(54) **STATOR FOR ROTARY ELECTRIC MACHINE AND ROTARY ELECTRIC MACHINE EQUIPPED WITH SAME**

(30) Priority: 05.09.2014 JP 2014180737
(71) Applicant: Hitachi Automotive Systems, Ltd., Hitachinaka-shi, Ibaraki 312-8503 (JP)
(72) Inventor: NAKAYAMA, Kenichi, Hitachinaka-shi Ibaraki 312-8503 (JP); MATSUNOBU, Yutaka, Hitachinaka-shi Ibaraki 312-8503 (JP); SHIMIZU, Hisaya, Hitachinaka-shi Ibaraki 312-8503 (JP); FUKUDA, Tomohiro, Hitachinaka-shi Ibaraki 312-8503 (JP)
(74) Representative: MERH-IP Matias Erny Reichl Hoffmann Patentanwälte PartG mbB
(86) International application number: PCT/JP2015/072982
(87) International publication number: WO 2016/035533

(57) **Abstract**

Provided is a stator of a rotary electric machine excellent in insulation property and productivity, and a rotary electric machine equipped therewith.

A stator 20 of a rotary electric machine includes: a stator core 132 that is provided with a plurality of slots 420; and a stator coil 60 that is provided in the slots, wherein N (herein, N is a positive even number) segment conductors 28 are provided in each slot, wherein the stator coil is configured such that the plurality of segment conductors are connected through welding portions, each of which is provided in a conductor end portion of each segment conductor, wherein the conductor end portions are arranged in an annular shape in a circumferential direction in a coil end in an axial direction, and N annular rows are configured, and wherein directions of punching burr portions 810 of a stator slot and the stator core on an inner-diameter side of the stator are inverted to a direction of a punching burr portion 810 of the stator core on an outer-diameter side of the stator.

## Description

### Technical Field

The present invention relates to a stator of a rotary electric machine and a rotary electric machine equipped therewith.

### Background Art

As one of efforts for coping with global warming in recent years, a rotary electric machine is requested to be compact in size but large in power. As such a rotary electric machine, there is known, for example, a machine which includes a stator core equipped with a number of slots opening on an inner peripheral side. In the rotary electric machine, a plurality of substantial U-shaped segment conductors are inserted to the slots to improve a space factor and to improve a cooling performance, so that a high output power is improved.

There is known a stator of a vehicular AC generator in which a direction of inserting the substantial U-shaped segment conductor into the slot is set to the same direction as a punching direction of stacked steel sheets of the stator core in order to prevent dielectric breakdown due to a burr portion of the stacked steel sheet (for example, see PTL 1). In addition, there is known a stator of the vehicular AC generator in which a direction of inserting the substantial U-shaped segment conductor into the slot is set to a direction inverted to the punching direction of the stacked steel sheets of the stator core in order to prevent a deviation of an insulating sheet and to prevent the dielectric breakdown (for example, see PTL 2).

Further, there is known a rotary electric machine in which the substantial U-shaped segment conductor is not provided, a round wire is used for winding, and an insertion direction of the stator into a housing and an insertion direction of a rotor into a shaft are defined in consideration of the burr portion of the stacked steel sheet (for example, see PTL 3).

### Citation List

### Patent Literature

PTL 1: JP 3478182 B2
PTL 2: JP 3478183 B2
PTL 3: JP 2008-199831 A

### Summary of Invention

### Technical Problem

The techniques disclosed in PTLs 1 and 2 are examined for the vehicular AC generator which is an air-cooling type and has a low voltage (12 Vdc). Therefore, these techniques are only to prevent the dielectric breakdown caused by the burr portion on a non-wiring side (segment insertion side) or a wiring side (non-insertion side). However, in the rotary electric machine used in an electric automobile or a hybrid electric automobile, the voltage is increased as high as 150 to 300 Vdc (or a boosted voltage of 600 Vdc), and liquid (for example, oil) is directly used in a transformer casing in many cases. Further, since such a rotary electric machine has a high voltage, there is a need to improve an insertion performance of the segment coil, the insulating sheet, the magnet, the shaft, and the housing due to the burr portion. Further, there is a need to prevent the burr portion of the core from falling away from the viewpoint of quality and reliability.

In addition, in the techniques of PTLs 1 and 2, a process of stacking steel sheets is performed on an assumption of a winding-type core as illustrated in FIG. 1 of PTL 1 and FIG. 6 of PTL 2. Since all of the burr portions of the winding-type core are formed in the same direction, the insertion direction of the segment conductor and the insertion direction of the burr portion of the slot portion are only considered. In a case where the steel sheets are punched using a punching die and stacked, the directions of the burr portions are not the same direction. Therefore, also the directions of the burr portions other than the slot should be considered to improve the insertion performance and to prevent the burr portion from falling away. It is a matter of course that the above case is considered when not only the stator core but also a rotor core is punched at the same time.

On the other hand, the technique disclosed in PTL 3 is implemented focusing on the rotary electric machine in which the round wire is wound. Therefore, there is not examined a sufficient study on the burr portion of the slot and the direction of inserting the coil where the dielectric breakdown occurs most easily. Accordingly, there is a problem in that reliability is lowered due to the burr portion. Further, there is a need to consider a sufficient study on the rotary electric machine in which a voltage used in an electric automobile or a hybrid electric automobile is 150 to 300 Vdc (or a boosted voltage of 600 Vdc).

An object of the invention is to provide a stator of a rotary electric machine excellent in insulation property and productivity, and a rotary electric machine equipped therewith.

### Solution to Problem

The invention employs, for example, configurations disclosed in claims in order to achieve the object.

The present application includes means for solving the object, and as an example, a stator of a rotary electric machine includes: a stator core that is provided with a plurality of slots; and a stator coil that is provided in the slots, wherein N (herein, N is a positive even number) segment conductors are provided in each slot, wherein the stator coil is configured such that the plurality of segment conductors are connected through welding portions, each of which is provided in a conductor end portion of each segment conductor, wherein the conductor end portions are arranged in an annular shape in a circumferential direction in a coil end in an axial direction, and N annular rows are configured, and wherein directions of punching burr portions of a stator slot and the stator core on an inner-diameter side of the stator are inverted to a direction of a punching burr portion of the stator core on an outer-diameter side of the stator.

### Advantageous Effects of Invention

According to the invention, the invention can provide a stator of a rotary electric machine excellent in insulation property and productivity, and a rotary electric machine equipped therewith.

The objects, configurations, and features other than those described above will become clear through the explanation about the following embodiments.

### Brief Description of Drawings

[FIG. 1] FIG. 1 is a view schematically illustrating the entire configuration of a rotary electric machine according to an embodiment of the invention.
[FIG. 2] FIG. 2 is a perspective view illustrating a stator core of the rotary electric machine according to a first embodiment of the invention.
[FIG. 3] FIG. 3 is a perspective view illustrating an electromagnetic steel sheet of a stator core according to the first embodiment of the invention.
[FIG. 4] FIG. 4 is a perspective view illustrating stator coils of three phases wound around the stator core.
[FIG. 5] FIG. 5 is a perspective view illustrating a U-phase stator coil wound around the stator core.
[FIG. 6] FIG. 6 is a perspective view illustrating a U1-phase stator coil wound around the stator core.
[FIG. 7] FIG. 7 is a perspective view illustrating a U2-phase stator coil wound around the stator core.
[FIGS. 8(a) to 8(c)] FIGS. 8(a) to 8(c) are diagrams for describing a segment conductor of the stator coil, 8(a) is a diagram illustrating one segment conductor, 8(b) is a diagram for describing a coil formation by the segment conductor, and 8(c) is a diagram for describing an arrangement of the segment conductor in a slot.
[FIG. 9] FIG. 9 is a diagram schematically illustrating cross sections of a rotor and a stator.
[FIG. 10] FIG. 10 is a perspective view illustrating a state where an insulating sheet is inserted to the stator core according to the first embodiment of the invention.
[FIG. 11] FIG. 11 is a perspective view illustrating a state where the stator coil is inserted to the stator core according to the first embodiment of the invention.
[FIG. 12] FIG. 12 is a plan view illustrating a state where the permanent magnet, the insulating sheet, and the stator coil are inserted to the stator core and the rotor core of the rotary electric machine according to the embodiment of the invention.
[FIG. 13] FIG. 13 is a plan view illustrating a state where the permanent magnet, the insulating sheet, and the stator coil are inserted to the stator core and the rotor core of the rotary electric machine according to the embodiment of the invention.
[FIG. 14] FIG. 14 is a plan view illustrating a state where the permanent magnet, the insulating sheet, and the stator coil are inserted in the stator core and the rotor core of a rotary electric machine according to a second embodiment of the invention.
[FIG. 15] FIG. 15 is a plan view illustrating a state where the permanent magnet, the insulating sheet, and the stator coil are inserted in the stator core and the rotor core of the rotary electric machine according to the second embodiment of the invention.
[FIG. 16] FIG. 16 is a diagram schematically illustrating a cross-sectional state of the stator core and the rotor core of the rotary electric machine according to the embodiment of the invention.
[FIG. 17] FIG. 17 is a diagram schematically illustrating a cross section when the stator core according to the embodiment of the invention is inserted to a housing.
[FIG. 18] FIG. 18 is a block diagram illustrating a configuration of a vehicle where the rotary electric machine according to the invention is mounted.

### Description of Embodiments

Hereinafter, embodiments of the invention will be described using the drawings. Further, in the following description, an electric motor used in a hybrid automobile will be used as an example of a rotary electric machine. In addition, in the following description, an "axial direction" indicates a direction along a rotating shaft of the rotary electric machine. A circumferential direction indicates a direction along the rotating direction of the rotary electric machine. A "radial direction" indicates a direction of radius about the rotating shaft of the rotary electric machine. An "inner peripheral side" indicates an inner side in the radial direction (inner-diameter side) and an "outer peripheral side" is the opposite direction, that is, an outer side in the radial direction (outer-diameter side).

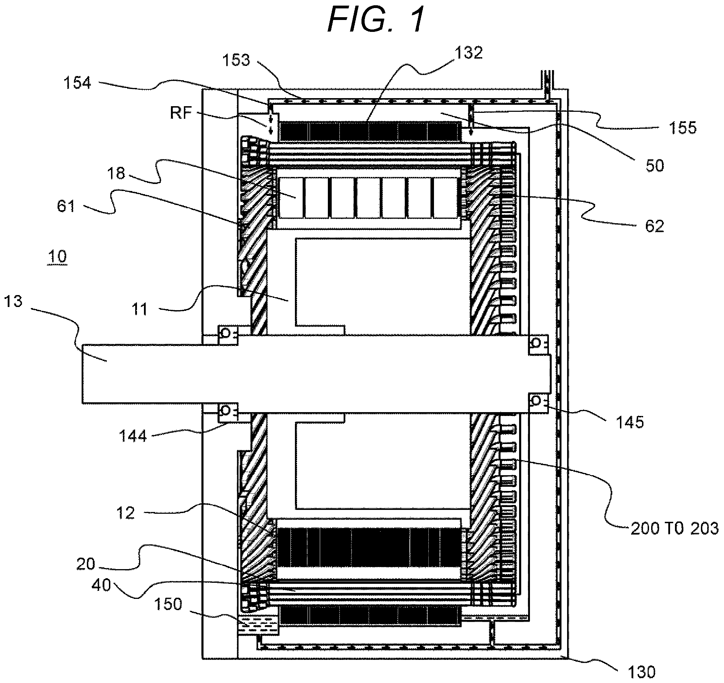

FIG. 1 is a cross-sectional view illustrating the rotary electric machine equipped with a stator according to the invention. A rotary electric machine 10 is configured by a housing 50, a stator 20, a stator core 132, a stator coil 60, and a rotor 11.

The stator 20 is fixed on the inner peripheral side of the housing 50. The rotor 11 is rotatably supported on the inner peripheral side of the stator 20. The housing 50 is configured by cutting a steel material such as carbon steel, or by molding case steel or aluminum alloy, or by an exterior covering of an electric motor formed in a cylindrical shape by a press machining. The housing 50 is called a frame body or a frame.

A liquid cooling jacket 130 is fixed to the outer peripheral side of the housing 50. A refrigerant passage 153 of a liquid refrigerant RF such as oil is configured by an inner peripheral wall of the liquid cooling jacket 130 and an outer peripheral wall of the housing 50, and the refrigerant passage 154 is formed not to leak the liquid. The liquid cooling jacket 130 stores bearings 144 and 145, and is also called a bearing bracket.

In the case of a direct liquid cooling scheme, the liquid refrigerant RF stored in a refrigerant (oil) storage space 150 passes through the refrigerant passage 153, and flows out from the refrigerant outlets 154 and 155 toward the stator 20, so that the stator 20 is cooled.

The stator 20 is configured by the stator core 132 and the stator coil 60. The stator core 132 is made by stacking thin plates such as a silicon steel plate. The stator coil 60 is wound around a number of slots 15 provided in the inner peripheral portion of the stator core 132. The heat generated from the stator coil 60 is transferred to the liquid cooling jacket 130 through the stator core 132, and radiated by the refrigerant RF circulating in the liquid cooling jacket 130.

The rotor 11 is configured by a rotor core 12 and a shaft 13. The rotor core 12 is made by stacking thin plates such as a silicon steel plate. The shaft 13 is fixed at the center of the rotor core 12. The shaft 13 is held by the bearings 144 and 145 fitted to the liquid cooling jacket 130 to be freely rotated, and rotates from a predetermined position in the stator 20 to a position facing the stator 20. In addition, a permanent magnet 18 and an end ring 19 are provided in the rotor 11.

The rotary electric machine 10 is disposed in the liquid cooling jacket 130 as illustrated in FIG. 1, and includes the housing 50, the stator 20 having the stator core 132 which is fixed to the housing 50, and the rotor 11 which is disposed in the stator to be freely rotated. The liquid cooling jacket 130 is configured by a case of an engine or a case of a transmission.

The rotary electric machine 10 is a three-phase synchronous motor equipped with a permanent magnet. The rotary electric machine 10 is operated as an electric motor which rotates the rotor 11 by supplying the three-phase AC current to the stator coil 60 wound around the stator core 132. In addition, when driven by the engine, the rotary electric machine 10 is operated as a generator to output the three-phase AC power. In other words, the rotary electric machine 10 has a function as the electric motor which generates a rotation torque on the basis of electric energy, and a function as the generator which generates power on the basis of mechanical energy. These functions may be selectively used according to a running state of an automobile.

The stator 20 fixed to the housing 50 is fastened to the liquid cooling jacket 130 by a flange 115 provided in the housing 50 and a bolt 15 to be fixedly held in the liquid cooling jacket 130.

The rotor 11 is fixed to a shaft 118 which is removably supported by the bearings 144 and 145 of the liquid cooling jacket 130, and held inside the stator core 132 to be freely rotated. There are provided the stator 20 which generates a rotating magnetic field, and the rotor 11 which is rotated by a magnetic operation with respect to the stator 20 and is disposed to be freely rotated on the inner peripheral side of the stator 20 with a gap 850 interposed therebetween.

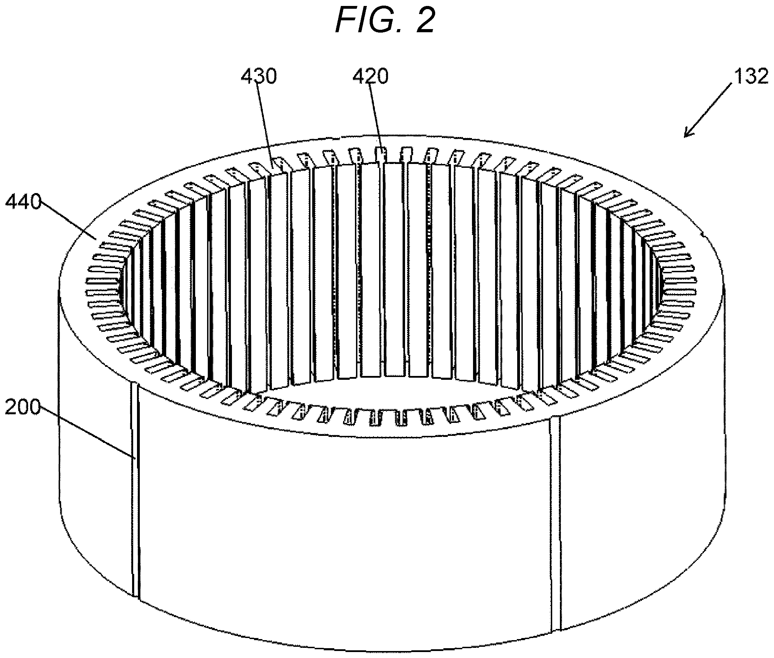

The housing 50 and the stator 20 will be described with reference to FIG. 2. FIG. 2 is a perspective view illustrating the housing 50 and the stator 20 of the rotary electric machine 10 according to a first embodiment of the invention.

The housing 50 is formed in a cylindrical shape by drawing a steel sheet of a thickness of 2 to 5 mm (for example, a high tensile steel sheet). A plurality of flanges 115 to be fitted to the liquid cooling jacket 130 are provided in the housing 50. The plurality of flanges 115 are convexly provided in the outside in the radial direction in the peripheral edge of one end surface of the cylindrical housing 50. Further, the flanges 115 are formed by cutting portions other than the flanges 115 in the end portion formed at the time of drawing, and is formed integrally with the housing 50.

### - Stator -

The stator 20 includes the cylindrical stator core 132 and the stator coil 60 which is mounted in the stator core 132.

### - Stator Core -

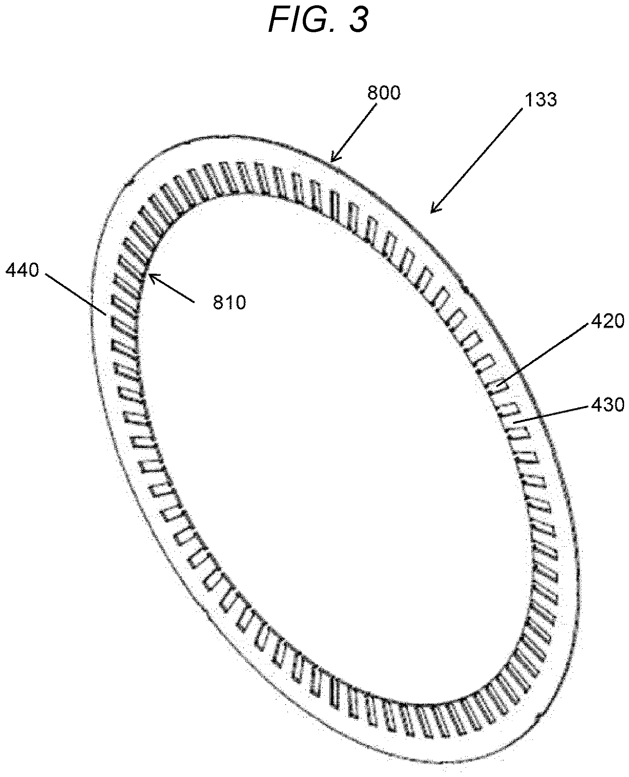

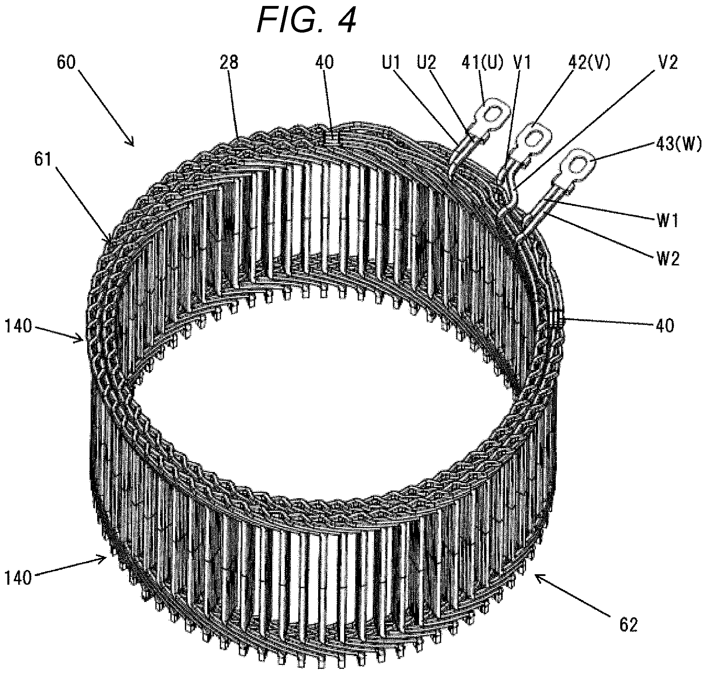

The stator core 132 will be described with reference to FIGS. 3 and 4. FIG. 3 is a perspective view illustrating the stator core 132, and FIG. 4 is a perspective view illustrating an electromagnetic steel sheet 133 forming the stator core 132. The stator core 132 is formed such that a plurality of slots 420 are disposed in the circumferential direction in parallel in the axial direction of the stator core 132 at an equal interval as illustrated in FIG. 3.

The number of slots 420 is, for example, 72 in this embodiment, and the stator coil 60 is contained in the slots 420. The inner peripheral side of each slot 420 is open, and a width of the opening in the circumferential direction is almost the same as that of a coil mounting portion of each slot 420 where the stator coil 60 is mounted, or is made slightly smaller than of the coil mounting portion.

Teeth 430 are formed between the slots 420, and each of the teeth 430 is integrally formed with an annular core back 440. In other words, the stator core 132 is formed as an integrated core such that each of the teeth 430 and the core back 440 are integrally formed.

The teeth 430 guide the rotating magnetic field generated by the stator coil 60 to the rotor 11, and cause the rotor 11 to generate the rotating torque.

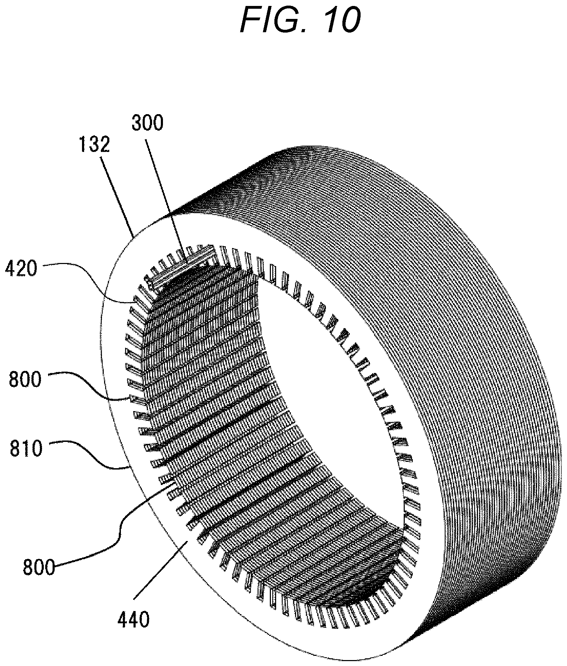

The stator core 132 is formed by punching the electromagnetic steel sheet 133 (see FIG. 4) of a thickness of about 0.05 to 1.0 mm, and by stacking the molded circular electromagnetic steel sheets 133 in a plurality of layers. A welding portion 200 is provided in parallel to the axial direction of the stator core 132 in the outer peripheral portion of the cylindrical stator core 132 by a TIG welding or a laser welding. The welding portion 200 is formed in a semicircular welding groove 210 provided in the other peripheral portion of the stator core 132 in advance as illustrated in FIG. 10, and the welding portion 200 does not protrude to the outside in the radial direction of the stator core 132.

As illustrated in FIG. 3, in the stator core 132 in this embodiment, the directions of dull portions 800 (the directions of burr portions 810) of the slot 420 of the stator core 132 and an inner diameter of the stator core 132 are inverted to the direction of the dull portion 800 (the direction of the burr portion 810) of an external diameter of the stator core 132. It is possible to make a segment conductor 28, an insulating sheet 300, the housing 50 easily insert by inverting the direction of the dull portion 800 (the direction of the burr portion 810).

The burr portion 810 and the dull portion 800 can be managed by adjusting a clearance between a punch 850 and a die 860 and a punching pressure thereof at the time of punching the dull portion 800 (the burr portion 810). Further, since the direction of the punch 850 and the die 860 is changed to invert the dull portion 800 and the burr portion 810, the press work may be a progressive type or a single-shot type.

With this configuration, the insulating sheet 300 and the segment conductor 28 are inserted from the direction of the dull portion 800, and inserted from the direction of the inverted dull portion 800 when being inserted to the housing 50 from the external diameter of the stator core 132. Therefore, the possibility to cause damage on the coating of the coil is reduced, the insulation property is improved, and also the workability is improved.

Even in a case where the components are fitted directly to the liquid cooling jacket 130 without the housing 50, it is possible to prevent the burr portion 810 from falling by fitting the components from the direction of the dull portion 800 of the stator core 132. Further, since the fitting can be implemented without a gap due to the burr portion 810, the reliability is also improved.

The stator core 132 is thermally fitted and fixed inside the cylindrical housing 50. As a specific assembly method, for example, the stator core 132 is first disposed, and the stator core 132 is fitted to the housing 50 which is heated in advance to thermally expand with its inner diameter. Next, the housing 50 is cooled to make the inner diameter shrink, and thus the outer peripheral portion of the stator core 132 is tightened by the thermal shrinkage.

The external diameter of the stator core 132 is made smaller by a predetermined value than that of the inner diameter of the housing 50 such that the stator core 132 does not run idle with respect to the housing 50 by a reaction caused by torque of the rotor 11 during running, and thus the stator core 132 is strongly fixed in the housing 50 by thermal fitting.

Herein, a difference between the external diameter of the stator core 132 and the inner diameter of the housing 50 at a room temperature is referred as a margin. The margin is set in consideration of a maximum torque of the rotary electric machine 10, so that the housing 50 holds the stator core 132 by a predetermined tightening force.

Further, the stator core 132 is not limited to be thermally fitted, and may be pressed fit into the housing 50.

As illustrated in FIG. 3, the welding portion 200 is provided in the stator core 132. The welding portion 200 connects the respective stacked electromagnetic steel sheets 133, and suppresses the electromagnetic steel sheet 133 from being deformed by the tightening force of the housing 50.

### - Stator Coil -

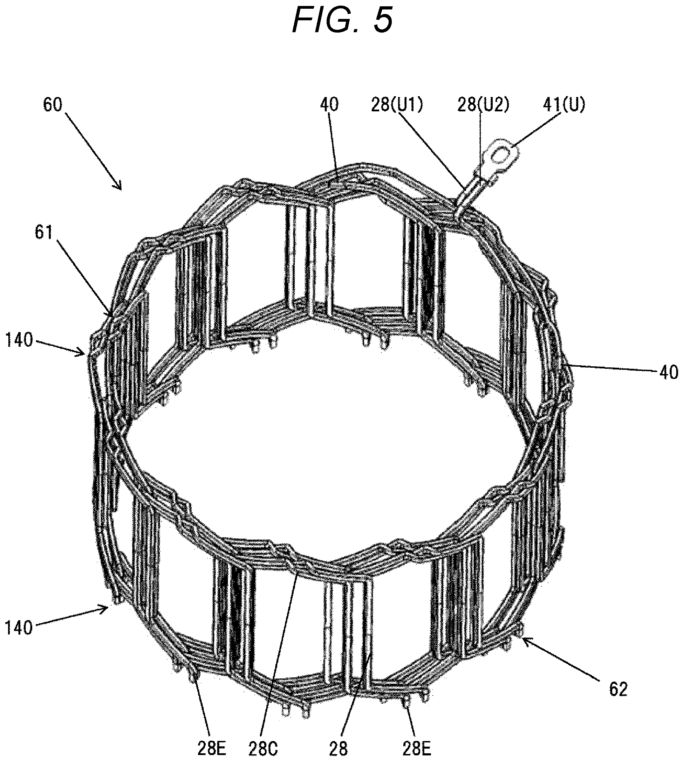

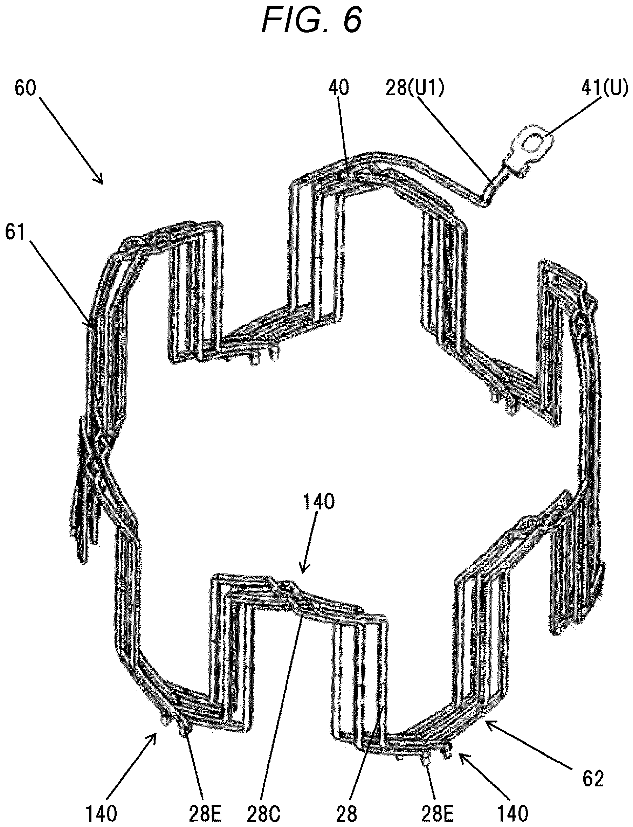

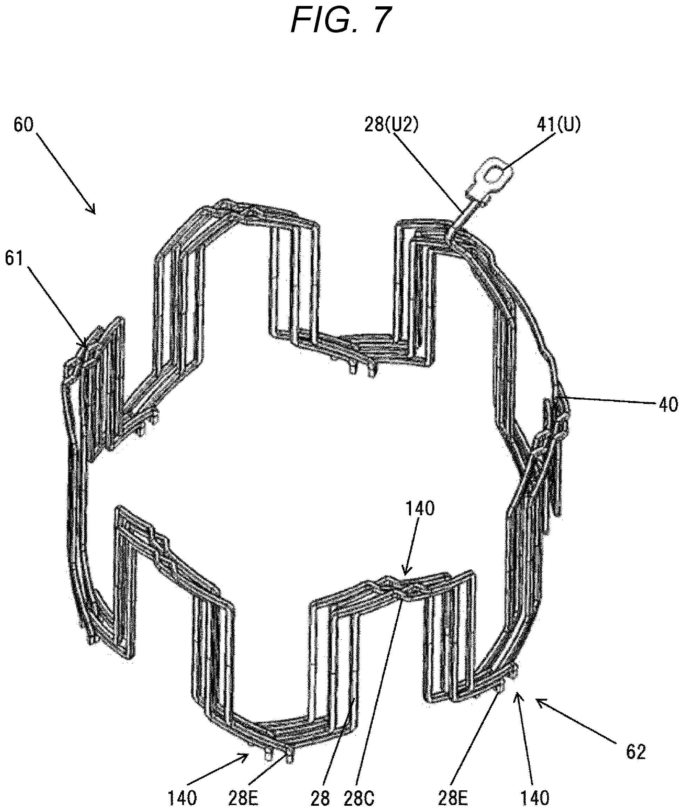

The stator coil 60 will be described with reference to FIGS. 2 and 5 to 8. FIG. 5 is a perspective view illustrating the stator coils 60 of three phases. FIGS. 6, 7, and 8 are perspective views illustrating the U-phase stator coil 60, the U1-phase stator coil 60, and the U2 stator coil 60 wound around the stator core 132, respectively.

The stator coil 60 is wound by a distributed winding method, and connected in a star connection. The distributed winding is a winding method in which the phase windings are wound around the stator core 132 to store the phase windings in two slots 420 separated across the plurality of slots 420. In this embodiment, since the distributed winding is employed as a winding method, the distribution of the formed magnetic flux is close to a sinusoidal wave compared to a concentrated winding, and easily generates reluctance torque. Therefore, the rotary electric machine 10 can improve controllability in a weak field control and in utilization of the reluctance torque, and can be used over a wide range from a low rotation speed to a high rotation speed, and can obtain excellent motor characteristics suitable to the electric automobile.

The stator coil 60 forms a phase coil in the three-phase star connection, and may have a circular or rectangular shape in its cross section. When the cross section of the inner portion of the slot 420 is used as effectively as possible, and the space in the slot is made small, the efficiency tends to improve. Therefore, it is desirable that the cross section be a rectangular shape in the viewpoint of improving the efficiency. Further, when the cross section of the stator coil 60 is made in a rectangular shape, the stator core 132 may be formed in a shape which is short in the circumferential direction, and long in the radial direction. In contrast, the stator core may be formed in a shape which is long in the circumferential direction, and short in the radial direction.

In this embodiment, as the stator coil 60, a flat wire is used to make a rectangular cross section of the stator coil 60 in each slot 420 long in the circumferential direction of the stator core 132 and short in the radial direction of the stator core 132. In addition, the outer periphery of the flat wire is coated with an insulating material.

As illustrated in FIG. 3(a), the segment conductor 28 is molded in a substantially U shape such that a vertex 28C of a non-welding side coil end 61 becomes a turning back point. At this time, the vertex 28C of the non-welding side coil end 61 may be formed in a shape that a direction of the conductor is turned back in the substantial U shape.

In other words, as illustrated in FIG. 3, a shape formed by the vertex 28C of the non-welding side coil end 61 and a conductor skew portion 28F of the non-welding side coil end 61 is not limited to a substantial triangle when viewed from the radial direction. For example, in a part of the vertex 28C of the non-welding side coil end 61, the conductor may be a shape substantially parallel to the end surface of the stator core 132 (the vertex 28C of the non-welding side coil end 61 and the conductor skew portion 28F of the non-welding side coil end 61 form a substantially trapezoidal shape when viewed from the radial direction).

The segment conductor 28 is inserted from the axial direction to the stator slot 420. Another segment conductor 28 inserted in a place separated by predetermined slots 420 is connected in a conductor end portion 28E (by welding for example) as illustrated in FIG. 3(b).

At this time, the segment conductor 28 is formed with a conductor straight portion 28S in a place where the wire is inserted to the slot 420, and a conductor skew portion 28D in a place where the wire is skewed toward the conductor end portion 28E of the segment conductor 28 of a connection counterpart (the skew portion 28D and the end portion 28E are formed by bending).

Two, four, six, ... (multiples of "2") segment conductors 28 are inserted in the slot 420. FIG. 3(c) illustrates an example in which four segment conductors 28 are inserted to one slot 420. Since the cross section of the conductor is rectangular, a space factor in the slot 420 can be improved, and the efficiency of the rotary electric machine 10 can be improved.

FIG. 4 is a diagram when the connection work of FIG. 3 (b) is repeatedly performed until the segment conductor 28 becomes an annular shape to form one-phase (for example, U phase) coil. The one-phase coil is configured such that the conductor end portion 28E is gathered to one side in the axial direction, and forms a welding side coil end 62 where the conductor end portion 28E is gathered, and the non-welding side coil end 61. In the one-phase coil, a terminal of each phase (for example, a U-phase terminal 42U in FIG. 4) is formed at one end, and a neutral line 41 is formed on the other end.

The stator coil 60 is formed by tightly winding total six systems (U1, U2, V1, V2, W1, and W2) of coils, and mounted in the stator core 132 as illustrated in FIG. 2. Then, the six systems of coils of the stator coil 60 are disposed with an interval therebetween suitable to each phase by the slot 420.

In a coil end 140 on one side in the stator coil 60, AC terminals 41(U), 42(V), and 43 (W) which are coil conductors for input/output of the stator coil 60 of the UVW three phases, and a neutral point connecting conductor 40 are lead out.

Further, the AC terminals 41(U), 42(V), and 43(W) used to receive three-phase AC power are disposed to protrude outward in the axial direction of the stator core 132 from the coil end 140 in order to improve the workability in assembly of the rotary electric machine 10. Then, the stator 20 is connected to a power conversion device (not illustrated) through the AC terminals 41(U), 42(V), and 43(W) to supply the AC power.

As illustrated in FIGS. 2 and 5, jumper wires are disposed in the coil end 140 which is a portion jumped outward in the axial direction from the stator core 132 in the stator coil 60, disposed orderly as a whole, and effective for miniaturization of the entire rotary electric machine 10. In addition, the orderly arranged coil end 140 is desirable from the viewpoint of improving the reliability to the insulating property.

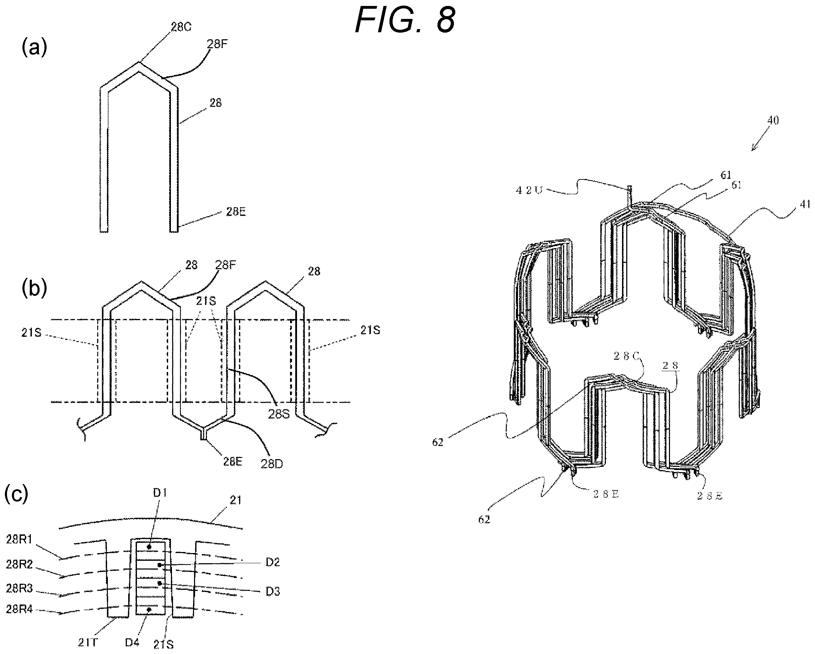

A winding method of the stator coil 60 will be simply described using FIGS. 8(a) to 8(c). A copper line which has a rectangular cross section and insulated using enamel is molded to the substantial U-shaped segment conductor 28 such that the vertex 28C of the non-welding side coil end becomes a turning back point as illustrated in FIG. 8 (a). At this time, the vertex 28C of the non-welding side coil end may be formed in a shape that the direction of the conductor is turned back in the substantial U shape. In other words, as illustrated in FIGS. 8(a) to 8(c), a shape formed by the vertex 28C of the non-welding side coil end and a conductor skew portion 28F of the non-welding side coil end are not limited to a substantial triangle when viewed from the radial direction. For example, in a part of the vertex 28C of the non-welding side coil end, the conductor may be a shape substantially parallel to the end surface of the stator core 21 (the vertex 28C of the non-welding side coil end and the conductor skew portion 28F of the non-welding side coil end form a substantially trapezoidal shape when viewed from the radial direction).

The segment conductor 28 is inserted from the axial direction to the stator slot. Another segment conductor 28 inserted in a place separated by predetermined slots is connected in a conductor end portion 28E (by welding for example) as illustrated in FIG. 8(b). At this time, the segment conductor 28 is formed with a conductor straight portion 28S in a place where the wire is inserted to the slot, and a conductor skew portion 28D in a place where the wire is skewed toward the conductor end portion 28E of the segment conductor of a connection counterpart (the skew portion 28D and the end portion 28E are formed by bending) . Two, four, six, ... (multiples of "2") segment conductors are inserted in the slot. FIG. 8(c) illustrates an example in which four segment conductors are inserted to one slot. Since the cross section of the conductor is rectangular, a space factor in the slot can be improved, and the efficiency of the rotary electric machine can be improved.

The stator coil 60 is structured such that the outer periphery of the conductor is coated with an insulating material and kept in electrical insulation property, and also an insulating breakdown voltage is kept using the insulating sheet 300 (see FIG. 2) in addition to the insulating material, so that the reliability can be improved still more.

The insulating sheet 300 is disposed in the slot 420 and the coil end 140. The insulating sheet 300 (that is, a slot liner) disposed in the slot 420 is disposed between the segment conductors 28 inserted to the slot 420 and between the segment conductor 28 and the inner surface of the slot 420, so that the insulating breakdown voltage is improved between the segment conductors and between the segment conductor 28 and the inner surface of the slot 420.

The insulating sheet 300 disposed in the coil end 140 is disposed in an annular shape between the segment conductors for the inter-phase insulation and for the inter-conductor insulation in the coil end 140. In addition, the insulating sheet 300 serves as a protection member to prevent a resin material (for example, polyester or epoxy liquid vanish) from being dropped down when the resin material is dropped onto part or all of the stator coils.

In this way, the rotary electric machine 10 according to this embodiment is provided with the insulating sheet 300 which is disposed inside the slot 420 and in the coil end 140. Therefore, even when the insulating material is damaged or degraded, a necessary insulating breakdown voltage can be secured. Further, the insulating sheet 300 is, for example, an insulating sheet made of a heat-resistant polyamide sheet, and has a thickness of about 0.1 to 0.5 mm.

The entire stator coil is covered with a resin member to reinforce the insulation. Alternatively, a first resin member (for example, polyester or epoxy liquid vanish) is dropped to part or all of the stator coil and cured. A second resin member (for example, epoxy powder vanish) may be used to cover the vicinity of the welding portion in order to reinforce the insulation of the welding portion.

### - Rotor -

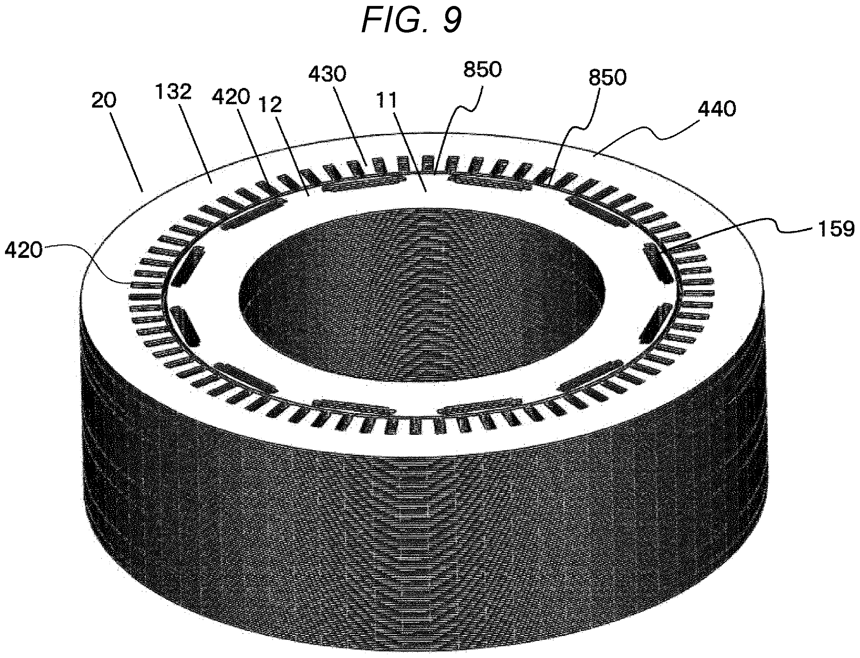

Next, the rotor 11 will be described with reference to FIGS. 1 and 9. FIG. 9 is a diagram schematically illustrating the cross sections of the rotor 11 and the stator 20. Further, the stator coil 60 and the insulating sheet 300 which are contained in the shaft 13 and the slot 420 will be omitted for avoiding complexity.

The rotor 11 includes the rotor core 12 and the permanent magnet 18 which is held in a magnet insertion hole 159 formed in the rotor core 12.

### - Rotor Core -

In the rotor core 12, the cuboid magnet insertion holes 159 are formed in the vicinity of the outer peripheral portion in an equal interval in the circumferential direction. The permanent magnet 18 is embedded in each magnet insertion hole 159 and fixed by an adhesive. The width of the magnet insertion hole 159 in the circumferential direction is formed larger than that of the permanent magnet 18 in the circumferential direction. A magnetic gap 156 is formed on both sides of the permanent magnet 18. The magnetic gap 156 may be filled with an adhesive, or may be fixed integrally with the permanent magnet 18 using a resin. Further, only a magnet may be provided depending on usage conditions, and there may be a clearance to which the magnet can be inserted.

In the rotor core 12 according to this embodiment, as illustrated in FIG. 3, the direction of the magnet insertion hole 159 of the rotor core 12 or the dull portion 800 (the direction of the burr portion 810) of the inner diameter of the rotor core 12 is inverted to the direction of the dull portion 800 (the direction of the burr portion 810) of the outer diameter of the rotor core 12. The insertion performance of the shaft 118, the permanent magnet 18, the stator 20, and the rotor 11 can be improved by inverting the direction of the dull portion 800 (the direction of the burr portion 810).

The burr portion 810 and the dull portion 800 can be managed by adjusting a clearance between a punch 850 and a die 860 and a punching pressure thereof at the time of punching the dull portion 800 (the burr portion 810). Further, since the direction of the punch 850 and the die 860 is changed to invert the dull portion 800 and the burr portion 810, the press work may be a progressive type or a single-shot type. A punching method will be described below.

With this configuration, when being inserted from the direction of the dull portion 800 and inserted to the stator 20, the shaft 118 and the permanent magnet 18 are inserted from the direction of the dull portion 800 of the rotor 11. Therefore, the possibility to cause damage on the coating of the coil of the stator coil 60 of the stator 20 is reduced, the insulation property is improved, and also the workability is improved.

### - Permanent Magnet -

The permanent magnet 18 is used to form a field pole of the rotor 11. Further, while one permanent magnet 18 is used to form one magnetic pole in this embodiment, one magnetic pole may be configured by a plurality of permanent magnets. A magnetic flux density of each magnetic pole of the permanent magnet can be increased by increasing the number of permanent magnets for each magnet pole, and thus magnet torque can be increased.

A magnetization direction of the permanent magnet 18 is arranged along the radial direction, and the magnetization direction is inverted at every field pole. In other words, when the surface of the permanent magnet 18 toward the stator for forming a magnetic pole is magnetized to an N pole, and the surface toward the shaft is magnetized to an S pole, the surface of the permanent magnet 18 toward the stator for forming the adjacent magnetic pole is magnetized to the S pole and the surface toward the shaft is magnetized to the N pole. In this embodiment, twelve permanent magnets 18 are disposed to be magnetized such that the magnetization direction is changed at every pole in an equal interval in the circumferential direction, so that the rotor 11 forms twelve magnet poles.

Further, the permanent magnet 18 may be embedded in the magnet insertion hole 159 of the rotor core 12 after magnetization, or may be inserted to the magnet insertion hole 159 of the rotor core 12 before magnetization and then applied with a strong magnetic field to be magnetized.

However, the permanent magnet 18 after magnetization has a strong magnetic force. Therefore, when the permanent magnet 18 is magnetized before being fixed to the rotor 11, a strong attraction force is generated with respect to the rotor core 12 at the time of fixing the permanent magnet 18, and thus the attraction force hinders the work. In addition, there is a concern that dust such as metal powder may be attached to the permanent magnet 18 due to the strong attraction. Therefore, the way of magnetizing the permanent magnet 18 after being inserted to the magnet insertion hole 159 of the rotor core 12 is desirable to improve the producibility of the rotary electric machine 10. Herein, a neodymium-based or samarium-based sintered magnet, a ferrite magnetic, or a neodymium-based bond magnet may be used as the permanent magnet 18. A residual magnetic flux density of the permanent magnet 18 is desirably about 0.4 to 1.3 T, and the neodymium-based magnet is more desirable.

In this embodiment, an auxiliary magnetic pole 160 is formed between the respective permanent magnets 18 which form the magnetic pole. The auxiliary magnetic pole 160 operates such that the magnetic resistance of a q-axis magnetic flux generated by the stator coil 60 becomes smaller. Then, since the magnetic resistance of the q-axis magnetic flux becomes significantly smaller than that of the d-axis magnetic flux by the auxiliary magnetic pole 160, a large reluctance torque is generated.

When the rotating magnetic field is generated in the stator 20 by supplying the three-phase AC current to the stator coil 60, the rotating magnetic field operates on the permanent magnet 18 of the rotor 11 to generate the magnet torque. In other words, since the reluctance torque is generated in the rotor 11 in addition to the magnet torque, both the torques of the magnet torque and the reluctance torque are operated as the rotating torque on the rotor 11. Therefore, a large rotating torque can be obtained.

With this configuration, the slot liner does not break, so that it is possible to obtain the rotary electric machine which satisfies the insulation property required for the electric automobile and the hybrid electric automobile.

Hitherto, the description has been given about the rotary electric machine of the permanent magnet type. However, since the feature of the invention relates to the welding portion of the coil end of the stator, the rotor may be applied to an induction type, a synchronous reluctance, and a claw magnetic pole type instead of the permanent magnet type. In addition, while a wave winding method is used as the winding method, any winding method may be used as long as the same feature is achieved. Next, while an inner rotary type will be described, an outer rotary type may be applied similarly.

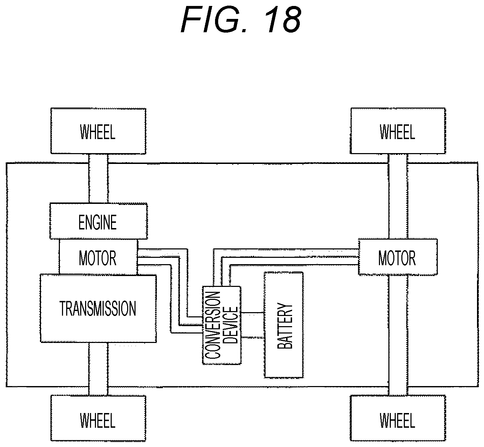

The description will be given using FIG. 18 about a configuration of a vehicle where the rotary electric machine 10 according to this embodiment is mounted. FIG. 18 illustrates a power train of the hybrid automobile which runs on the basis of four-wheel drive. As a primary driving force of the front wheels, the engine and the rotary electric machine 10 are provided. The driving force generated by the engine and the rotary electric machine 10 is shifted by the transmission, and the driving force is transferred to the front driving wheels. In addition, the rotary electric machine 10 disposed in the rear wheels is mechanically connected to the rear wheels at the time of driving the rear driving wheels.

The rotary electric machine 10 switches the generation of a driving force and the generation of power obtained by recovering the energy at the time of decelerating the vehicle as the electric energy according to a running state of the vehicle after the engine starts. The driving and power generation operation of the rotary electric machine 10 is controlled by a power conversion device such that the torque and the rotation frequency come to be suitable to a running situation of the vehicle. The power required to the driving of the rotary electric machine 10 is supplied from a battery through the power conversion device. In addition, when the rotary electric machine 10 generates the power, the battery is charged with electric energy through the power conversion device.

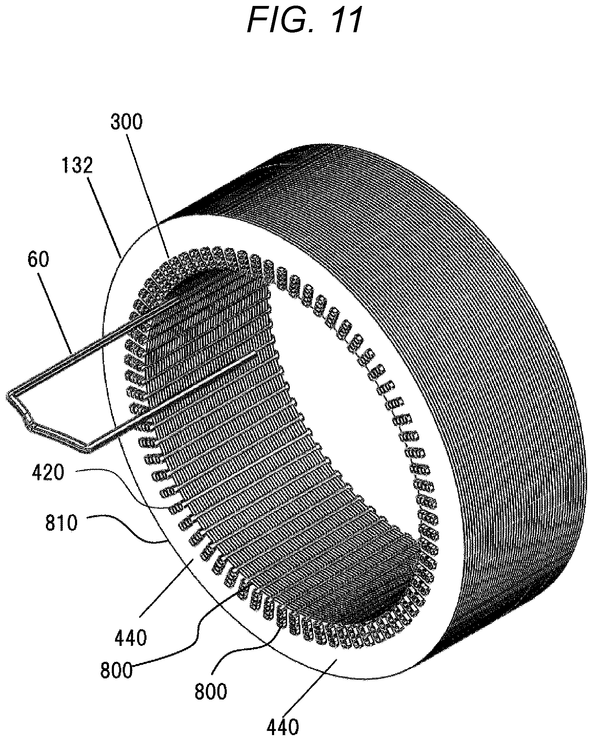

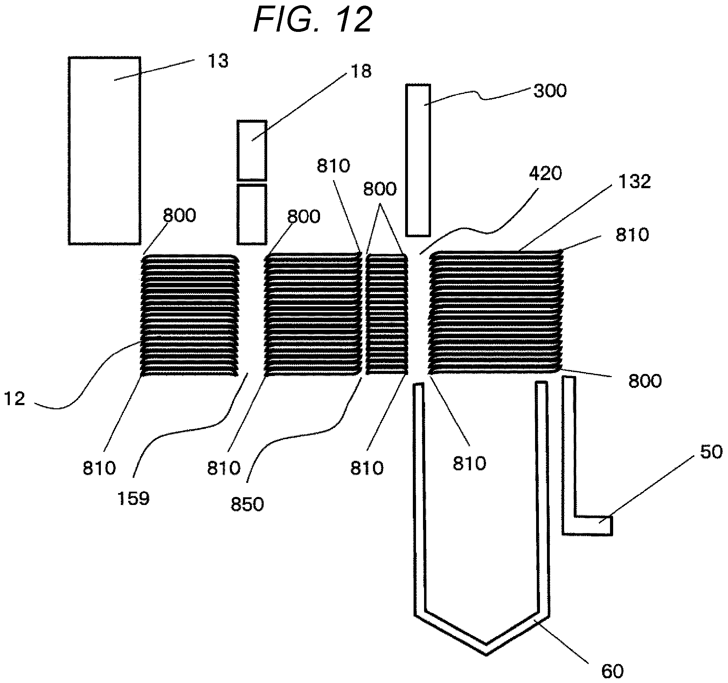

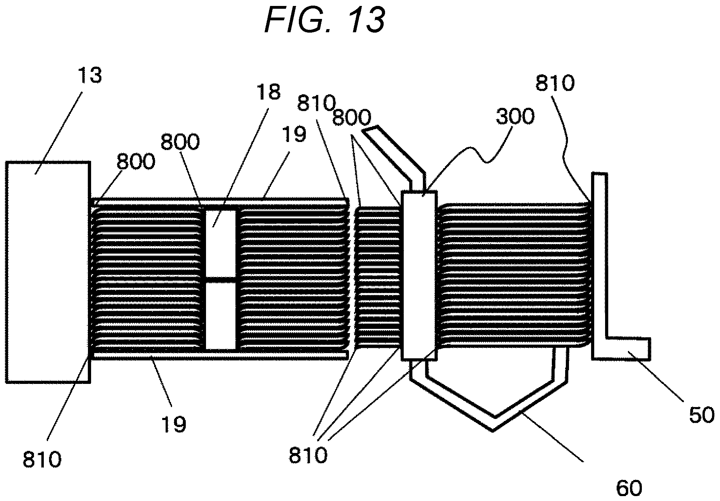

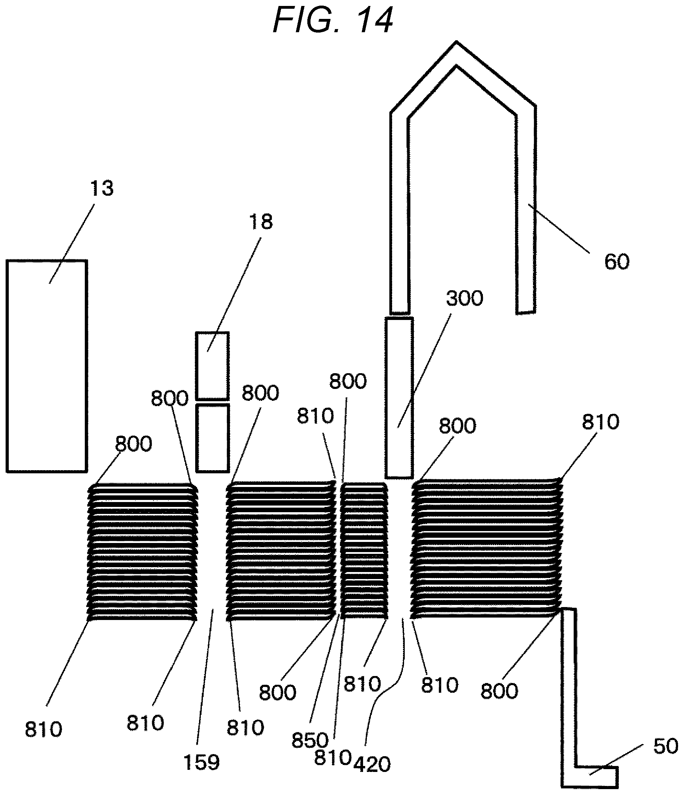

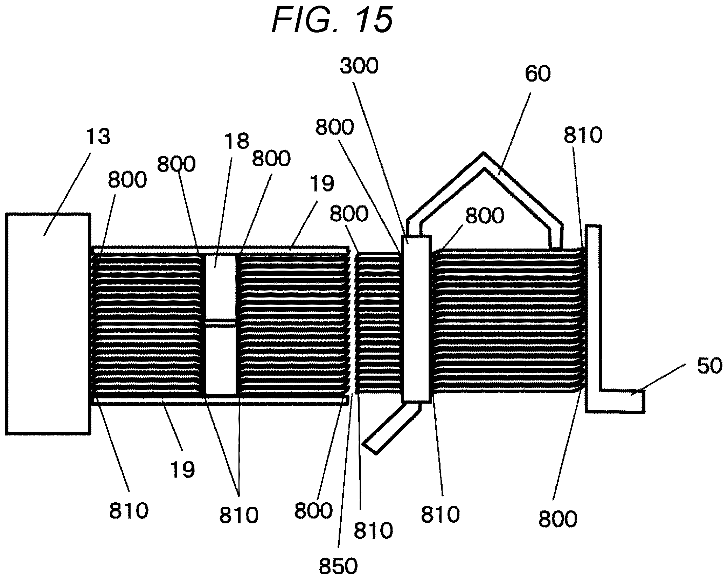

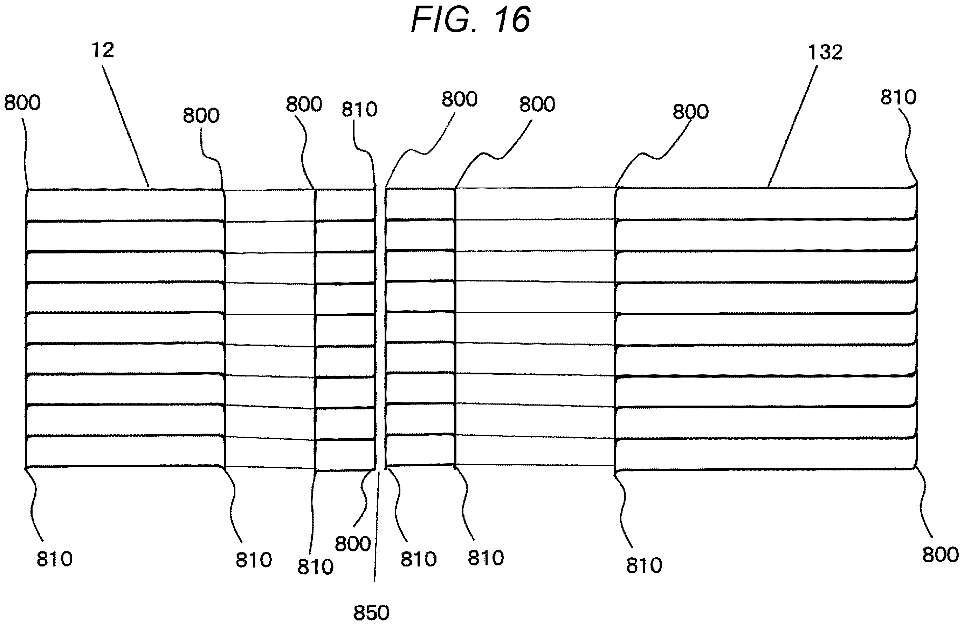

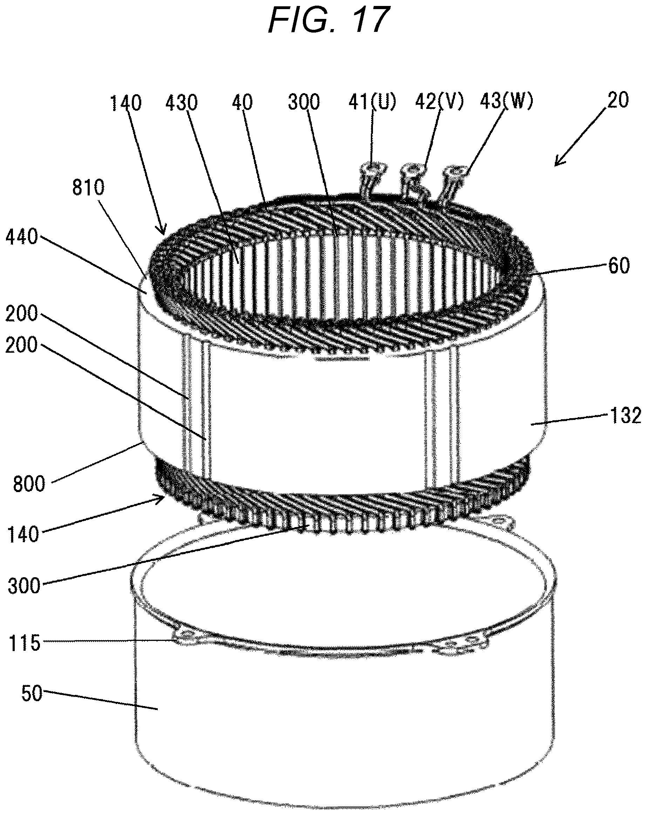

Herein, the rotary electric machine 10 serving as a power source of the front wheels is disposed between the engine and the transmission, and has the configuration described in FIGS. 1 to 17. The rotary electric machine 10 serving as a driving force source of the rear wheels may have the same configuration, or other rotary electric machines having typical configuration may be used. Further, it is a matter of course that such a configuration can be applied to a hybrid type other than the four-wheel drive type.

As described above, according to the invention, it is possible to provide a stator of a rotary electric machine excellent in insulation property and productivity, and a rotary electric machine equipped therewith.

Further, the invention is not limited to the above embodiments, and various modifications can be made. For example, the embodiments are described in a clearly understandable way for the invention, and thus the invention is not necessarily to provide all the configurations described above. Furthermore, additions, omissions, and substitutions may be made on some configurations of each embodiment using other configurations.

In addition, the description has been given about the rotary electric machine for the electric automobile and the hybrid electric automobile as an application of the invention. As a matter of course, if the same effects are obtained, an auxiliary motor for an automobile such as an alternator, a starter generator (including a motor generator), an electric compressor, and an electric pump may be applied to an industrial motor such as an elevator or a household motor such as an air conditioning compressor.

### Reference Signs List

10: rotary electric machine
11: rotor
12: rotor core
13: shaft
15: bolt
18: permanent magnet
19: end ring
20: stator
28: segment conductor
28C: vertex of non-welding side coil end
28D: skew portion of segment conductor coil on wiring side
28E: conductor end portion
28F: skew portion of segment conductor coil on non-wiring side
40: neutral point connecting conductor
41: AC terminals (U), 42(V), and 43(W)
50: housing
60: stator coil
61: non-welding side coil end
62: welding side coil end
115: flange
130: liquid cooling jacket
132: stator core
133: electromagnetic steel sheet
140: coil end
144: bearing
145: bearing
150: refrigerant (oil) storage space
153: refrigerant passage
154: refrigerant outlet
155: refrigerant outlet
156: magnetic gap
159: magnet insertion hole
200: welding portion
201: caulking portion
210: welding groove
300: insulating sheet
420: slot
430: teeth
440: core back
800: dull portion
810: burr portion
850: punch
860: die

## Claims

1. A stator of a rotary electric machine, comprising:
a stator core that is provided with a plurality of slots; and
a stator coil that is provided in the slots,
wherein N (herein, N is a positive even number) segment conductors are provided in each slot,
wherein the stator coil is configured such that the plurality of segment conductors are connected through welding portions, each of which is provided in a conductor end portion of each segment conductor,
wherein the conductor end portions are arranged in an annular shape in a circumferential direction in a coil end in an axial direction, and N annular rows are configured, and
wherein directions of punching burr portions of a stator slot and the stator core on an inner-diameter side of the stator are inverted to a direction of a punching burr portion of the stator core on an outer-diameter side of the stator.

2. A rotary electric machine, comprising:
the stator of the rotary electric machine according to claim 1; and
a rotor that includes a rotor core equipped with a plurality of magnet insertion holes and a magnet inserted to the magnet insertion hole, and includes an inner diameter hole to which a shaft is inserted on an inner-diameter side,
wherein the rotor is disposed on the inner-diameter side of the stator with a gap interposed therebetween, and
wherein directions of punching burr portions of the magnet insertion hole and the rotor core of the inner diameter hole are inverted to a direction of a punching burr portion of the rotor core on an outer-diameter side of the rotor.

3. The rotary electric machine according to claim 2,
wherein a stator core and the rotor core are punched from the same steel sheet.

4. The rotary electric machine according to claim 2,
wherein a direction of pressing stacked steel sheets, a direction of inserting a segment conductor into the stator, a direction of inserting the slot into a housing, a direction of inserting the rotor into the stator, a direction of inserting a magnet into the rotor, and a direction of inserting the shaft into the rotor are the same direction.

5. The rotary electric machine according to claim 2,
wherein a direction of pressing stacked steel sheets, a direction of inserting the stator into a housing, a direction of inserting the rotor into the stator, a direction of inserting a magnet into the rotor, and a direction of inserting the shaft into the rotor are the same direction, and
wherein only a direction of inserting the segment conductor into a slot is an inverted direction.

6. The rotary electric machine according to claim 2,
wherein wiring terminals of U, V, and W phases are in a direction of inserting a segment conductor into a slot.

7. The rotary electric machine according to claim 4 or 5,
wherein AC terminals of U, V, and W phases are disposed on a side in a direction of inserting a segment conductor into a slot.

8. The rotary electric machine according to claim 7,
wherein a stator coil is cooled down using oil.

9. An induction rotary electric machine, comprising:
the stator of the rotary electric machine according to claim 1; and
a rotor that includes a rotor core equipped with a plurality of guiding bar insertion portions and guiding bars inserted to the insertion portions, and includes an inner diameter hole to which a shaft is inserted on the inner-diameter side,
wherein the rotor is disposed on the inner-diameter side of the stator with a gap interposed therebetween, and
wherein directions of punching burr portions of the guiding bar insertion portions and the rotor core of the inner diameter hole are inverted to a direction of the punching burr portion of the rotor core on the outer-diameter side of the rotor.

10. A synchronous reluctance torque rotary electric machine, comprising:
the stator of the rotary electric machine according to claim 1; and
a rotor that includes a rotor core equipped with a plurality of slots and an inner diameter hole to which a shaft is inserted on the inner-diameter side,
wherein the rotor is disposed on the inner-diameter side of the stator with a gap interposed therebetween, and
wherein directions of punching burr portions of the plurality of slots and the rotor core of the inner diameter hole are inverted to a direction of the punching burr portion of the rotor core on the outer-diameter side of the rotor.
